(19) **Europäisches Patentamt European Patent Office Office européen des brevets**

(11) **EP 4 571 790 A1**

(12) **EUROPEAN PATENT APPLICATION**

(43) Date of publication:
18.06.2025 Bulletin 2025/25

(21) Application number: 23215547.3

(22) Date of filing: 11.12.2023

(51) International Patent Classification (IPC):
H01B 9/02 (2006.01)    H01B 12/06 (2006.01)

(52) Cooperative Patent Classification (CPC):
H01B 12/06; H01B 9/02; H01B 9/027

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: NKT GmbH & Co. KG
51061 Köln (DE)

(72) Inventors:
• SEDÉN, Martin
  Västerås (SE)
• WILLÉN, Dag
  Klagshamn (SE)

(74) Representative: Kransell & Wennborg KB
P.O. Box 27834
115 93 Stockholm (SE)

(54) **SUPERCONDUCTING POWER CABLE**

(57) A superconducting power cable (1) comprising: a former (3), a superconducting conductor (5) comprising a superconducting conductor layer (7a) arranged around the former (3), an insulation layer (9) arranged around the superconducting conductor (5), a screen (11) arranged around the insulation layer (9), wherein the screen (11) comprises: two concentrically arranged conducting screen layers (13,17), wherein at least one of the conducting screen layers (13, 17) is a normal conductor layer arranged to carry fault currents, and an insulating or semiconducting layer (15) arranged between the two conducting screen layers (13, 17).

Fig. 1

# EP 4 571 790 A1

**Description**

**TECHNICAL FIELD**

The present disclosure generally relates to superconducting power cables.

**BACKGROUND**

In order to make superconductors a reasonable alternative to a high voltage power cable, an efficient cooling is required. For type II superconductors, it is sufficient to cool the cable with liquid nitrogen since the critical temperatures of these high temperature superconductor (HTS) materials is above 77 K which is the boiling point of nitrogen in room temperature and atmospheric pressure.

Since cryogenic temperatures along the full cable length are necessary for the operational functionality of the superconducting cable, one or more cooling stations must be placed along the cable route to ensure sufficiently low temperatures and sufficiently high pressures to allow a cooling flow of liquid nitrogen along the cable.

**SUMMARY**

To minimize the cable dimensions, installation footprint and cooling system maintenance, it is strongly desired to reduce the heat losses of the cable as much as possible. This would avoid abundant pumps, coolers or liquid nitrogen filling points along the route and would reduce installation and superconducting power cable system and equipment costs.

In view of the above, an object of the present disclosure is to provide a superconducting power cable which solves, or at least mitigates problems of the prior art.

There is hence provided a superconducting power cable comprising: a former, a superconducting conductor comprising a superconducting conductor layer arranged around the former, an insulation layer arranged around the superconducting conductor, a screen arranged around the insulation layer, wherein the screen comprises: two concentrically arranged conducting screen layers, wherein at least one of the conducting screen layers is a normal conductor layer arranged to carry fault currents, and an insulating or semiconducting layer arranged between the two conducting screen layers.

The AC losses of the superconducting cable are substantially reduced by insulating/semi-insulating the two conducting screen layers from each other compared to the case when the conducting screen layers are in direct contact with each other, because the insulating or semiconducting layer reduces leakage of induced currents in the screen, between the conducting screen layers.

Further, because of the lower AC losses, the temperature of the superconducting power cable can be kept lower, meaning that fewer cooling stations may be required along the route of the superconducting power cable.

The superconducting power cable may be designed for equal but oppositely directed currents through the superconducting conductor and screen.

A "normal conductor layer" is a layer made of a normal conductor. A normal conductor is a metal conductor which has an electrical resistivity above zero at all temperatures Kelvin. Examples of normal conductor metal materials are copper, aluminium, and their alloys.

Each normal conductor layer may for example comprise copper.

According to one embodiment the insulating or semiconducting layer has a resistivity $\rho$ and a radial thickness t, wherein $\rho/t > 4*10^{-5}\ \Omega$.

According to one embodiment the insulating or semiconducting layer is a semiconducting layer, wherein $1*10^{-3}\ \Omega < \rho/t < 4*10^7\ \Omega$.

According to one embodiment the screen comprises N concentrically arranged conducting screen layers, N being an integer equal to or greater than 2, and A) N-1 insulating or semiconducting layers, wherein each of the insulating or semiconducting layers is arranged between respective pairs of adjacent conducting screen layers, or B) less than N-1 insulating or semiconducting layers, wherein each of the insulating or semiconducting layers is arranged between a respective one of a corresponding number of pairs of adjacent conducting screen layers.

According to one embodiment the insulating or semiconducting layer is formed of tape laid helically around the insulation layer.

According to one embodiment the insulating or semiconducting layer comprises a polymeric material.

In addition to low cryogenic losses, in particular low AC losses, it is advantageous to provide a robust superconductor conductor design which is resilient to defects in the elongated superconducting elements of which the superconducting conductor layers are made, and to over-currents generated by the electrical system, for example through short circuits, switching operations or high loads. This is particularly advantageous in a high voltage superconductor conductor which is insulated by an insulation layer, and therefore often is operating at a higher temperature than other layers of the superconducting power cable, and which is exposed to the highest magnetic field strengths in the superconducting power cable.

According to one embodiment the superconducting conductor layer is a first superconducting conductor layer, and the superconducting conductor comprises an additional superconducting conductor layer arranged in direct contact with the first superconducting conductor layer.

This allows a robustness against local defects of the elongated superconducting elements and sudden quenching in the superconducting conductor.

According to one embodiment an innermost of the conducting screen layers is a superconducting conductor screen layer.

According to one embodiment the superconducting conductor layer comprises a plurality of elongated first superconducting elements laid in a first direction, and the superconducting conductor screen layer of the screen comprises a plurality of elongated second superconducting elements laid in the first direction.

According to one embodiment the elongated first superconducting elements have a first pitch and the elongated second superconducting elements have a second pitch, wherein a ratio between the inverse of the first pitch and the inverse of the second pitch is in a range of 0.5 to 1.5. Thus, $0.5 \leq \text{lambda}_{\text{first\_superconducting\_elements}}/\text{lambda}_{\text{second\_superconducting\_elements}} \leq 1.5$, where $\text{lambda}_{\text{first\_superconducting\_elements}}$ is the first inverse pitch and $\text{lambda}_{\text{second\_superconducting\_elements}}$ is the second inverse pitch.

According to one embodiment the range is 0.8 to 1.2.

According to one embodiment the range is 1.05 to 1.1.

The closer the first and the second pitch values are, the smaller the losses in the superconducting power cable due to induced currents in the conducting screen layer because of cancelation effects.

In a general example the superconducting conductor comprises Np superconducting conductor layers, where Np is an integer equal to or greater than 2, and the screen comprises Ns superconducting conductor screen layers, with Ns being equal to or greater than 1, then

$$0.8 < \text{Sum}[i=1..Np](\text{lambda\_c}(i)/\text{Sum}[j=1..Ns]\text{lambda\_s}(i) < 1.2,$$

where lambda_c(i)=1/Lpc(i), where Lpc(i) is the pitch of the i:th superconducting conductor layer with i=1 being the innermost superconducting conductor layer, and lambda_s(i)=1/Lp_screen(i) is the inverse pitch of the i:th superconducting conductor screen layer, with i=1 being the innermost superconducting conductor screen layer.

According to one embodiment the superconducting conductor screen layer is arranged directly radially outside of the insulation layer.

According to one embodiment the superconducting conductor layer comprises a high temperature superconducting, HTS, material.

According to one example, the superconductor conductor screen layer comprises an HTS material.

According to one embodiment the superconducting power cable is an AC power cable.

Generally, all terms used in the claims are to be interpreted according to their ordinary meaning in the technical field, unless explicitly defined otherwise herein. All references to "a/an/the element, apparatus, component, means, etc." are to be interpreted openly as referring to at least one instance of the element, apparatus, component, means, etc., unless explicitly stated otherwise.

## BRIEF DESCRIPTION OF THE DRAWINGS

The specific embodiments of the inventive concept will now be described, by way of example, with reference to the accompanying drawings, in which:

Fig. 1 schematically shows a cross section of an example of a superconducting power cable;

Fig. 2 schematically shows a cross section of another example of a superconducting power cable; and

Fig. 3 is a schematic cross section of yet another example of a superconducting power cable.

## DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

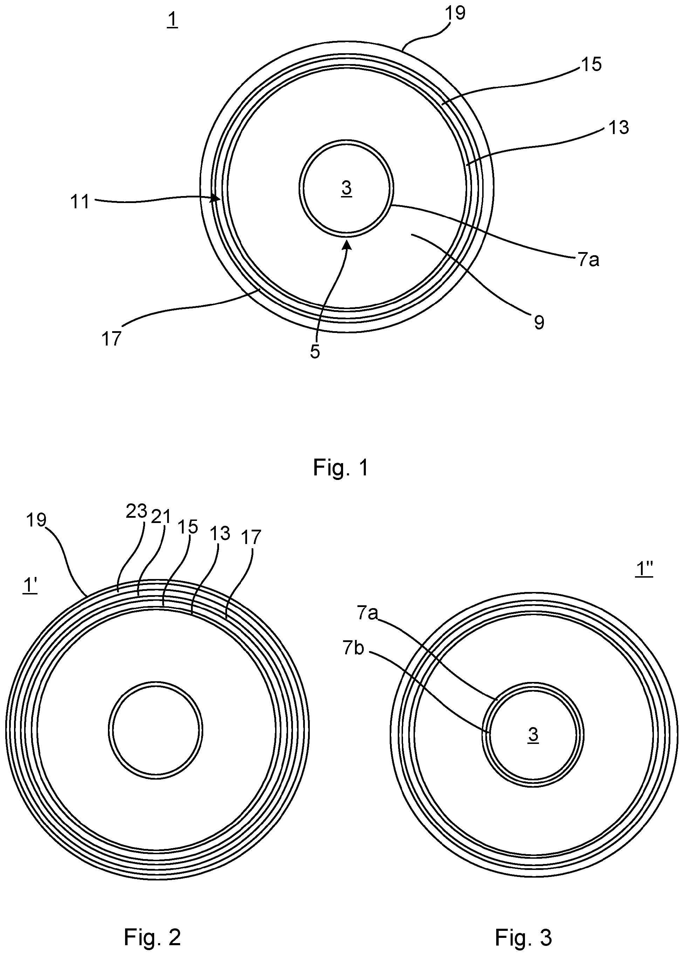

Fig. 1 schematically shows a cross section of an example of a superconducting power cable 1. For reasons of simplicity, not all layers of the superconducting power cable 1 are shown: for example, the cryostat, which is arranged radially outside the illustrated layers of the superconducting power cable is not shown.

The exemplified superconducting power cable 1 shows a single core AC power cable but the superconducting power cable could alternatively be a multiphase AC power cable with a coaxial, or so-called "triax", configuration, or have multiple power cores arranged along separate axes. The superconducting power cable 1 could according to another example be a DC power cable.

The superconducting power cable 1 may be a high voltage or a medium voltage superconducting power cable 1.

The superconducting power cable 1 comprises a former 3. The former may be solid or hollow.

The superconducting power cable 1 comprises a superconducting conductor 5 arranged around the former 3.

The superconducting conductor 5 comprises a superconducting conductor layer 7a. The superconducting conductor layer 7a may for example be formed by elongated first superconducting elements, such as tape, laid in a first direction along the axial extension of the former 3. The laying in the first direction is a helical laying.

The superconducting conductor 5 may comprise a single superconducting conductor layer 7a, as shown in Fig. 1, or a plurality of superconducting conductor layers 7a, 7b, as shown in the example in Fig. 3. Adjacent superconducting layers 7a, 7b are in this case preferably laid with opposing lay direction. Thus, for example, if the superconducting conductor layer 7a is laid in the first direction, then a second superconducting layer 7b is laid in a second direction which is opposite to the first direction.

Each superconducting conductor layer 7a, 7b may comprise an HTS material.

The superconducting power cable 1 comprises an insulation layer 9. The insulation layer is arranged around the superconducting conductor 5.

The superconducting power cable 1 also comprises a screen 11. The screen 11 is arranged radially outside the insulation layer 9. The screen 11 may be arranged in direct contact with the insulation layer 9.

The screen 11 comprises a plurality of concentrically arranged conducting screen layers 13, 17. The screen 11 thus at least comprises two conducting screen layers 13, 17, of which at least one is a normal conducting layer. According to another example, all the conducting screen layers 13, 17 are normal conducting layers.

According to the example shown in Fig. 1, the innermost conducting screen layer 13 is a superconducting conductor screen layer. The superconducting conductor screen layer comprises a plurality of elongated second superconducting elements, such as tape. The elongated second superconducting elements may be laid in the first direction, i.e., the same lay direction as the superconducting conductor layer 7a.

In the example in Fig. 1, the screen 11 furthermore comprises an insulating or semiconducting layer 15 arranged between the two conducting screen layers 13 and 17. The two conducting screen layers 13 and 17 are thus separated from each other by means of the insulating or semiconducting layer 15.

The superconducting power cable 1 may optionally comprise a layer 19 covering the screen 11. This may for example be the case, if the cable shown in Fig. 1 forms one of the power cores of a multi-core superconducting power cable with parallel non-coaxial power cores. Additional layers not shown include a cryostat arranged around the screen 11, and if present, layer 19. In case the superconducting power cable 1 has multiple power cores, or a triax configuration, all phases typically share the same cryostat.

In the example in Fig. 2, the superconducting power cable 1' comprises more than two conducting screen layers but is otherwise essentially identical to the superconducting power cable 1 shown in Fig. 1, although the innermost conducting screen layer could be either a superconducting conductor screen layer or a normal conducting layer.

The superconducting power cable 1' comprises three conducting screen layers 13, 17, 23 arranged concentrically, and two insulating or semiconducting layers 15, 21. A first insulating or semiconducting layer 15 is arranged between the innermost conducting screen layers 13 and the intermediate conductor screen 17, arranged radially between the innermost conductor screen layer 13 and an outermost conducting screen layer 23. A second insulating or semiconducting layer 21 is arranged between the intermediate conducting screen layer 17 and the outermost conducting screen layer 23.

None, one, or more than one of the conducting screen layers 13, 17, and 23 may be a superconducting conductor screen layer. Typically, at least one of the conducting screen layers 13, 17, and 23 is a normal conducting layer.

In one variation of the superconducting power cable 1', the screen layer may have only a single insulating or semiconducting layer. Thus, two of the conducting screen layers will be in direct electrical contact with each other in this variation.

In one general example, in which there are N conducting screen layers, N being an integer greater than 2, the screen may comprise N-1 insulating or semiconducting layers, with each insulating or semiconducting layer being arranged between a respective pair of adjacent conducting screen layers. Thus, in this case, all the conducting screen layers are separated from each other by means of an insulating or semiconducting layer.

In another general example, in which there are N conducting screen layers, N being an integer greater than 2, the screen may comprise less than N-1 insulating or semiconducting layers. In this case at least two of the conducting screen layers are in direct contact with each other, while some of the conducting screen layers are separated from each other by an insulating or semiconducting layer. For example, there may be three conducting screen layers, and only one insulating or semiconducting layers, arranged between two of the conducting screen layers. The AC loss reduction will be lower than when there is an insulating or semiconducting layer between all the conducting screen layers but better compared to having no insulating or semiconducting layer at all.

In some examples with N conducting screen layers, there may be more than one superconducting conductor screen layer.

In the example of the superconducting power cable 1" shown in Fig. 3, the superconducting conductor comprises two superconducting conductor layers 7a, 7b. Alternatively, the superconducting conductor could comprise more than two superconducting layers 7a, 7b. The superconducting layers may layer by layer be arranged with an alternating lay direction. Further, in one variation of the superconducting power cable 1", there may be more than two conducting screen layers, e.g., N conducting screen layers as described above.

The inventive concept has mainly been described above with reference to a few examples. However, as is readily appreciated by a person skilled in the art, other embodiments than the ones disclosed above are equally possible within the scope of the inventive concept, as defined by the appended claims.

**Claims**

1. Superconducting power cable (1; 1'; 1") comprising:

   - a former (3),
   - a superconducting conductor (5) comprising a superconducting conductor layer (7a, 7b) arranged around the former (3),
   - an insulation layer (9) arranged around the superconducting conductor (7a, 7b),
   - a screen (11) arranged around the insulation layer (9), wherein the screen (11) comprises:

     two concentrically arranged conducting screen layers (13, 17, 23), wherein at least one of the conducting screen layers (17, 23) is a normal conductor layer arranged to carry fault currents, and
     an insulating or semiconducting layer (15, 21) arranged between the two conducting screen layers (13, 17, 23).

2. Superconducting power cable (1; 1'; 1") as claimed in claim 1, wherein the insulating or semiconducting layer (15, 21) has a resistivity $\rho$ and a radial thickness t, wherein $\rho/t > 4*10^{-5}\ \Omega$.

3. Superconducting power cable (1; 1'; 1") as claimed in claim 2, wherein the insulating or semiconducting layer (15, 21) is a semiconducting layer, wherein $1*10^{-3}\ \Omega < \rho/t < 4*10^{7}\ \Omega$.

4. Superconducting power cable (1; 1'; 1") as claimed in any of the preceding claims, wherein the screen (11) comprises N concentrically arranged conducting screen layers (13, 17, 23), N being an integer equal to or greater than 2, and A) N-1 insulating or semiconducting layers (15, 21), wherein each of the insulating or semiconducting layers (15, 21) is arranged between respective pairs of adjacent conducting screen layers (13, 17, 23), or B) less than N-1 insulating or semiconducting layers, wherein each of the insulating or semiconducting layers (15, 21) is arranged between a respective one of a corresponding number of pairs of adjacent conducting screen layers.

5. Superconducting power cable (1; 1'; 1") as claimed in any of the preceding claims, wherein the insulating or semiconducting layer (15, 21) is formed of tape laid helically around the insulation layer (9).

6. Superconducting power cable (1; 1'; 1") as claimed in any of the preceding claims, wherein the insulating or semiconducting layer (15, 21) comprises a polymeric material.

7. Superconducting power cable (1; 1'; 1") as claimed in any of the preceding claims, wherein the superconducting conductor layer (7a) is a first superconducting conductor layer, and the superconducting conductor comprises an additional superconducting conductor layer (7b) arranged in direct contact with the first superconducting conductor layer (7a).

8. Superconducting power cable (1; 1'; 1") as claimed in any of the preceding claims, wherein an innermost of the conducting screen layers (13) is a superconducting conductor screen layer.

9. Superconducting power cable (1; 1'; 1") as claimed in claim 8, wherein the superconducting conductor layer (7a, 7b) comprises a plurality of elongated first superconducting elements laid in a first direction, and the superconducting conductor screen layer of the screen (11) comprises a plurality of elongated second superconducting elements laid in the first direction.

10. Superconducting power cable (1; 1'; 1") as claimed in claim 9, wherein the elongated first superconducting elements have a first pitch and the elongated second superconducting elements have a second pitch, wherein a ratio between the inverse of the first pitch and the inverse of the second pitch is in a range of 0.5 to 1.5.

11. Superconducting power cable (1; 1'; 1") as claimed in claim 9, wherein the range is 0.8 to 1.2.

12. Superconducting power cable (1; 1'; 1") as claimed in claim 9, wherein the range is 1.05 to 1.1.

13. Superconducting power cable (1; 1'; 1") as claimed in any of the preceding claims, wherein the superconducting conductor screen layer is arranged directly radially outside of the insulation layer (9).

14. Superconducting power cable (1; 1'; 1") as claimed in any of the preceding claims, wherein the superconducting conductor layer (7a, 7b) comprises a high temperature superconducting, HTS, material.

15. Superconducting power cable (1; 1'; 1") as claimed in any of the preceding claims, wherein the superconducting power cable (1; 1'; 1") is an AC power cable.

Fig. 1

Fig. 2

Fig. 3

Europäisches
Patentamt
European
Patent Office
Office européen
des brevets

# EUROPEAN SEARCH REPORT

**Application Number**

EP 23 21 5547

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/175078 A1 (YUMURA HIROYASU [JP] ET AL) 10 August 2006 (2006-08-10) * paragraphs [0034], [0337]; figure 1 * | 1,2,4,5, 13-15 | INV. H01B9/02 H01B12/06 |
| X | EP 1 551 038 A1 (SERVICIOS CONDUMEX S A [MX]) 6 July 2005 (2005-07-06) * paragraphs [0013], [0014]; figure 1 * | 1-4,6,7, 14,15 | |
| X | US 2007/029104 A1 (ALLAIS ARNAUD [DE] ET AL) 8 February 2007 (2007-02-08) * paragraphs [0031], [0032]; figures 1, 2 * | 1-5, 7-13,15 | |
| A | WO 2007/080794 A1 (SUMITOMO ELECTRIC INDUSTRIES [JP]; YUMURA HIROYASU [JP]) 19 July 2007 (2007-07-19) * figures 1, 2 * | 1-15 | |

**TECHNICAL FIELDS SEARCHED (IPC)**

H01B

The present search report has been drawn up for all claims

| Place of search | Date of completion of the search | Examiner |
|---|---|---|
| The Hague | 24 April 2024 | Alberti, Michele |

EPO FORM 1503 03.82 (P04C01)

## ANNEX TO THE EUROPEAN SEARCH REPORT
## ON EUROPEAN PATENT APPLICATION NO.

EP 23 21 5547

This annex lists the patent family members relating to the patent documents cited in the above-mentioned European search report.
The members are as contained in the European Patent Office EDP file on
The European Patent Office is in no way liable for these particulars which are merely given for the purpose of information.

24-04-2024

| Patent document cited in search report | | | Publication date | Patent family member(s) | | Publication date |
|---|---|---|---|---|---|---|
| US 2006175078 | A1 | | 10-08-2006 | CA | 2519887 A1 | 31-03-2005 |
| | | | | CN | 1809900 A | 26-07-2006 |
| | | | | EP | 1667171 A1 | 07-06-2006 |
| | | | | HK | 1089869 A1 | 08-12-2006 |
| | | | | JP | 4300517 B2 | 22-07-2009 |
| | | | | JP | 2005100777 A | 14-04-2005 |
| | | | | KR | 20060088111 A | 03-08-2006 |
| | | | | RU | 2340969 C2 | 10-12-2008 |
| | | | | US | 2006175078 A1 | 10-08-2006 |
| | | | | WO | 2005029509 A1 | 31-03-2005 |
| EP 1551038 | A1 | | 06-07-2005 | AT | E446580 T1 | 15-11-2009 |
| | | | | EP | 1551038 A1 | 06-07-2005 |
| | | | | ES | 2336663 T3 | 15-04-2010 |
| US 2007029104 | A1 | | 08-02-2007 | AT | E526671 T1 | 15-10-2011 |
| | | | | CN | 1855317 A | 01-11-2006 |
| | | | | DK | 1717821 T3 | 24-10-2011 |
| | | | | EP | 1717821 A1 | 02-11-2006 |
| | | | | ES | 2374547 T3 | 17-02-2012 |
| | | | | JP | 5064716 B2 | 31-10-2012 |
| | | | | JP | 2006310310 A | 09-11-2006 |
| | | | | KR | 20060113407 A | 02-11-2006 |
| | | | | US | 2007029104 A1 | 08-02-2007 |
| WO 2007080794 | A1 | | 19-07-2007 | JP | 5115778 B2 | 09-01-2013 |
| | | | | JP | 2007188844 A | 26-07-2007 |
| | | | | TW | 200735128 A | 16-09-2007 |
| | | | | WO | 2007080794 A1 | 19-07-2007 |

EPO FORM P0459

For more details about this annex : see Official Journal of the European Patent Office, No. 12/82